# EUROPÄISCHE PATENTANMELDUNG

(11) **EP 2 745 906 A1**
(43) Veröffentlichungstag der Anmeldung: **25.06.2014**
(21) Anmeldenummer: 13198699.4
(22) Anmeldetag: 20.12.2013
(51) Int. Cl.: B01D 33/04, B01D 33/067, B01D 33/21, B01D 33/46, B01D 33/50, B01D 33/68, B01D 33/80, B01D 29/09, B01D 29/60, B01D 29/64, B01D 29/68, B01D 29/86

(54) **Verfahren zur Mechanischen Feststoffabscheidung aus Abwasser**

(30) Priorität: 21.12.2012 AT 506112012
(71) Anmelder: Gassner, Kurt, 2011 Sierndorf (AT)
(72) Erfinder: Gassner, Kurt, 2011 Sierndorf (AT)
(74) Vertreter: Babeluk, Michael

(57) **Zusammenfassung**

Die Erfindung betrifft ein Verfahren zur mechanischen Feststoffabscheidung aus Abwasser aus Industrie und/oder Kommunen mit einer wässrigen Fraktion und einer Feststofffraktion, wobei kontinuierlich oder diskontinuierlich das zu reinigenden Abwasser einem Behälter (110) zugeführt wird, das zu reinigende Abwasser über zumindest einen Zulauf (120) in einen Anströmraum (111) eingeleitet wird, das Abwasser über zumindest eine Filtrationseinrichtung (200) mit einer bewegbaren Filterfläche (210) filtriert wird, wobei die in dem Abwasser enthaltene Feststofffraktion an der Filterflächenoberseite (212) der Filterfläche (210) der zumindest einen Filtrationseinrichtung (200) abgelagert wird, während die das Filtrat bildende Wasserfraktion aufgrund der Schwerkraft in einen Filtratraum (112) strömt und im Filtratraum (112) eine gerichtete Fluidströmung an die Filterflächenunterseite (211) der Filterfläche (210) der zumindest einen Filtrationseinrichtung (200) erfolgt, sowie eine Vorrichtung hierzu.

## Beschreibung

Die Erfindung betrifft ein Verfahren zur mechanischen Feststoffabscheidung aus Abwasser aus Industrie und/oder Kommunen mit einer wässrigen Fraktion und einer Feststofffraktion, wobei kontinuierlich oder diskontinuierlich das zu reinigenden Abwasser einem Behälter zugeführt wird, das zu reinigende Abwasser über zumindest einen Zulauf in einen Anströmraum eingeleitet wird, das Abwasser über zumindest eine Filtrationseinrichtung mit einer bewegbaren Filterfläche filtriert wird, wobei die in dem Abwasser enthaltene Feststofffraktion an der Filterflächenoberseite der Filterfläche der zumindest einen Filtrationseinrichtung abgelagert wird, während die das Filtrat bildende Wasserfraktion aufgrund der Schwerkraft in einen Filtratraum strömt, sowie eine Vorrichtung hierzu.

Aufgrund gesetzlicher Bestimmungen mit höheren Abscheide- und Reinigungsvorgaben erfolgt die mechanische Feststoffabscheidung aus Flüssigkeiten, insbesondere aus kommunalen und industriellen Abwässern immer häufiger mittels angeströmter Mikrofiltration. Hierfür stehen Trommel-, Scheiben- oder Bandfilter in verschiedenen konstruktiven Ausführungen zur Verfügung, wobei die hydraulische Durchsatzleistung der eingesetzten Anlagen von der getauchten Filterfläche und deren Porengröße, dem Verlegungspotenzial der Filterfläche sowie der Art und Häufigkeit der Filterflächenreinigung abhängig ist.

Üblicherweise wird bei der Bemessung der richtigen Porengröße der Mikrofilter auf die erforderliche hydraulische Durchsatzleistung und der durchschnittlichen Partikelgröße der Feststofffraktion unter Betriebsbedingungen geachtet. Diese Bewertung gestaltet sich jedoch in der Praxis oft sehr schwierig, weil die abzuscheidenden Feststoffe gewöhnlich unterschiedliches Verblockungspotenzial aufweisen und meistens nur über aufwendige Versuche und den dabei erhobenen empirischen Werten eine geeignete Wahl der Filterkomponenten zulassen.

Der Wirkungsgrad einer Mikrofilteranlage, insbesondere hinsichtlich der hydraulischen Durchsatzleistung und der Feststoffabscheidung sowie der hierfür aufgewendeten Energie, ist zum Einem von der Trennschärfe und der damit verbundenen Feststoffabscheidung pro mm² getauchter Filterfläche und zum Anderen von der rückstandsfreien Reinigung des Mikrofilters von Feststoffen abhängig, wobei der zweite Faktor vorwiegend den Energieverbrauch bestimmt. Verstärkt trifft dies zu, wenn die Mikrofilterreinigung nur mit erhöhter Intensität von Druckluft und dem Einsatz von Hochdruckreiniger, insbesondere unter Verwendung von Heißwasser (70 - 90°C) möglich ist. Die Laufzeit von Mikrofiltern wird wesentlich durch eine effiziente und kontinuierliche Reinigung von Feststoffen bestimmt, weshalb diese von besonderer Wichtigkeit ist.

Eine wesentliche Erkenntnis in der Mikrofiltrations-Technologie ist, dass, je kleiner die Porengröße des Mikrofilters gewählt ist, desto höher die erzielte Abscheidung der Feinstteilchen ist, wobei sich jedoch gleichzeitig die hydraulische Durchsatzleistung und damit die Effizienz der Anlage verringert.

In der WO 2001/56681 A1 ist eine Vorrichtung zur Abwasserreinigung mit einem Bandfilter beschrieben, die die oben angeführten Nachteile des Stands der Technik aufweist.

Es ist daher Aufgabe der Erfindung, ein Verfahren zur mechanischen Feststoffabscheidung aus Abwässern bereitzustellen, das die oben angeführten Nachteile des Stands der Technik beseitigt und eine verbesserte Feststoffabscheidung und damit verbunden eine Erhöhung des hydraulischen Durchsatzes erlaubt, wobei bevorzugterweise gleichzeitig der Bedarf an Energie reduziert wird.

Diese Aufgabe wird erfindungsgemäß durch ein Verfahren der eingangs erwähnten Art dadurch gelöst, dass im Filtratraum eine gerichtete Fluidströmung an die Filterflächenunterseite der Filterfläche der zumindest einen Filtrationseinrichtung erfolgt. Durch das Anströmen der Unterseite der getauchten Filterfläche mit einem Fluid wird die Absenkgeschwindigkeit der Feststofffraktion im Abwasser auf die Oberseite der zumindest einen Filtrationseinrichtung reduziert, während die Anströmgeschwindigkeit des Abwassers durch die Filterfläche erhöht wird. Damit wird ein frühes Verblocken der getauchten Filterfläche mit feinen Partikeln verhindert. Die gerichtete Fluidströmung kann beispielsweise durch Einbringen von Flüssigkeit, insbesondere durch Umpumpen von Filtratflüssigkeit oder bevorzugterweise durch Einblasen von Gasen erfolgen.

In einer besonders bevorzugten Ausführung der Erfindung wird zur Bildung der gerichteten Fluidströmung Luft über zumindest eine Fluideinlassvorrichtung an die Filterflächenunterseite der zumindest einen Filtrationseinrichtung angeströmt. Die Luft wird hierbei über die Fluideinlassvorrichtung bevorzugterweise in Form eines aus aufsteigenden fein- und mittelgroßen Luftblasen gebildeten Luftvorhangs an die Unterseite der Filterfläche geführt.

Die vorzeitige Verblockung der zumindest einen Filtrationseinrichtung wird noch effizienter verhindert, wenn die zumindest eine Filtrationseinrichtung zusätzlich in Vibration versetzt wird. Hierbei ist besonders bevorzugt die Strömungsgeschwindigkeit der Luft aus der zumindest einen Fluideinlassvorrichtung derart gewählt, dass sie eine Vibration der zumindest einen Filtrationseinrichtung hervorruft. Alternativ oder zusätzlich können auch (mechanische) Vibrationseinrichtungen vorgesehen sein, die eine Vibration der Filtrationseinrichtung hervorrufen. Durch die Vibration der getauchten Filterfläche werden Partikel, insbesondere mit geringem spezifischem Gewicht und/oder Durchmesser von der Oberfläche der Filterfläche weggeschleudert. Damit setzen sich im Anströmraum bevorzugt Partikel mit größerem Durchmesser an der Oberfläche der Filtrationseinrichtung ab, während Feststoffe mit geringer Partikelgröße, sogenannte Feinstteilchen, die eine vorzeitige Verblockung der Filteroberfläche verursachen würden, in Schwebe gehalten werden und somit eine höhere Verweildauer innerhalb des Anströmraums oberhalb der Filterfläche aufweisen.

In einer besonders bevorzugten Ausführung der Erfindung wird bei Erreichen eines vorbestimmten ersten Flüssigkeitspegels im Anströmraum die Anströmung über die zumindest eine Fluideinlassvorrichtung im Filtratraum unterbrochen. Während des Anströmens der Filterflächenunterseite mit Luft sowie der gleichzeitigen Vibration der Filterfläche setzen sich bevorzugt größere Partikel der Feststofffraktion im Anströmraum auf der Filterfläche ab. Je weiter dieses Absetzen fortschreitet, desto geringer wird die Filtrationsgeschwindigkeit und der Flüssigkeitsspiegel steigt innerhalb des Anströmraums, sobald die Filtrationsgeschwindigkeit geringer wird als der Zulauf an Abwasser in den Anströmraum. Sobald ein vorgegebener Flüssigkeitspegel im Anströmraum überschritten ist, wird die Fluidanströmung, insbesondere die Lufteinströmung im Filtratraum unterbrochen. Dabei fällt der Flüssigkeitspegel in dem Filtratraum in Abhängigkeit des eingeströmten Fluidvolumens, insbesondere des entweichenden Luftvolumens, wodurch an der Unterseite der Filterfläche eine Sogwirkung entsteht, die die Durchtrittsgeschwindigkeit der wässrigen Fraktion des Abwassers durch die Filtereinrichtung erhöht. Durch den Wegfall der Vibration der Filterfläche erfolgt eine intensive Anströmung und Absetzung der Partikel auch mit geringer Größe auf die Filteroberfläche, wobei die bereits auf der Filteroberfläche abgesetzten Partikel mit größerem Durchmesser und Oberfläche zusätzliche Filterfläche für die Feinstteilchen bereitstellen. Dadurch erhöht sich insgesamt die Dichte und Stärke des an der Filteroberfläche abgesetzten Filterkuchens bei minimalster Absetzzeit im Vergleich zu Verfahren gemäß dem bekannten Stand der Technik, was wiederum eine Erhöhung der hydraulischen Durchsatzleistung und Abscheideleistung zur Folge hat.

Des Weiteren ist besonders bevorzugt vorgesehen, dass bei Erreichen des vorbestimmten ersten Flüssigkeitspegels im Anströmraum die mit der Feststofffraktion belegte Filterfläche aus den Anströmraum heraus bewegt wird, während eine von Partikel befreite Filterfläche in den Anströmraum bewegt wird. Damit steht stets freie und frische Filterfläche zur Verfügung.

Eine weitere Verbesserung der Absetzleistung wird erzielt, wenn zusätzlich in dem Anströmraum eine Nanoflotation, vorzugsweise eine Entspannungsflotation durchgeführt wird. Mit Hilfe der Flotation werden die Feinstteilchen zu größeren, an der Flüssigkeitsoberfläche treibenden Agglomeraten verbunden, was die Verblockung der getauchten Filteroberfläche weiter reduziert.

Besonders bevorzugt ist vorgesehen, dass die Steuerung des erfindungsgemäßen Verfahrens vollautomatisch erfolgt. Die Steuerung überwacht stets die Flüssigkeitspegel im Anströmraum sowie im Filtratraum, und steuert anhand der erhaltenen Werte die Fluidanströmung im Filtratraum, die Bewegung der Filterfläche aus dem Anströmraum heraus, die Reinigung der Filterfläche außerhalb des Anströmraums, sowie gegebenenfalls den Zulauf im Anströmraum, und die Nanoflotation. Selbstverständlich ist die Steuerung auch für die Überwachung und Regelung weiterer Parameter, die nicht unmittelbar mit dem erfindungsgemäßen Mikrofiltrationsverfahren in Zusammenhang stehen, einsetzbar.

Die Aufgabe wird des Weiteren gelöst durch eine Vorrichtung zur mechanischen Feststoffabscheidung aus Abwasser mit einem Behälter, der kontinuierlich oder diskontinuierlich mit dem zu reinigenden Abwasser beschickt wird, wobei zumindest eine in dem Behälter angeordnete Filtrationseinrichtung den Behälter in einen Anströmraum und in zumindest einen Filtratraum trennt, und die zumindest eine Filtrationseinrichtung zumindest eine Filterfläche mit einer dem Anströmraum zugewandte Oberseite und eine dem Filtratraum zugewandte Unterseite aufweist, wobei erfindungsgemäß zumindest eine Fluideinlassvorrichtung in dem Filtratraum angeordnet ist.

Unter "Behälter" wird im Rahmen dieser Offenbarung jede Einrichtung verstanden, die zur Aufnahme von zulaufendem Abwasser geeignet ist. Hierbei kann es sich um offene oder geschlossenen Behältnisse, Becken und dergleichen handeln, wobei in einer Variante der Erfindung eine geeignete Filtrationseinrichtung in einem Kanalabschnitt zur Durchführung des erfindungsgemäßen Verfahrens derart angeordnet ist, dass dieser Kanalabschnitt als Behälter im Sinne der Erfindung fungiert.

Erfindungsgemäß ist vorgesehen, dass die zumindest eine Filtrationseinrichtung zumindest eine Filterfläche mit einer dem Anströmraum zugewandten Oberseite und einer dem Filtratraum zugewandten Unterseite aufweist, und zumindest eine Fluideinlassvorrichtung in dem Filtratraum der Unterseite der Filterfläche der zumindest einen Filtrationseinrichtung zugewandt angeordnet ist, sodass das aus der zumindest einen Fluideinlassvorrichtung austretende Fluid, insbesondere Luft die Unterseite der Filterfläche anströmt. Hierbei erfolgt die Anströmung der Filterfläche mit Luft entweder vollflächig oder nur in einem Teilbereich, wobei die einstellbare Luftmenge in Abhängigkeit vom Verblockungspotential regelbar ist. Ebenso ist besonders bevorzugt vorgesehen, dass die zumindest eine Fluideinlassvorrichtung in dem Filtratraum verstellbar angeordnet ist, um eine optimale Anströmung der Filterflächenunterseite zu erzielen.

Hierbei ist in einer bevorzugten Ausführung der Erfindung die zumindest eine Fluideinlassvorrichtung als Belüftungsmembran ausgebildet. Diese Belüftungsmembran ist in der Lage, einen vollflächigen und gleichmäßigen Belüftungsvorhang mit hohem Luftertragswert zu erzeugen. Dynamische Membranbelüfter haben ein geringeres Verblockungspotenzial gegenüber statischen Belüftern, wie z.B. aus Sinter- oder Keramikmaterial.

In einer besonders bevorzugten Variante der Erfindung ist die zumindest eine Filtrationseinrichtung in dem Behälter geneigt zu der Vertikalachse des Behälters angeordnet. Dies erleichtert die Bewegung der mit Feststoffpartikeln belegten Filterfläche aus den Anströmraum heraus sowie die Reinigung der Filterfläche.

In der praktischen Anwendung haben sich jene Anlagen bewährt, bei denen die zumindest eine Filtrationseinrichtung ein dynamischer Filter, insbesondere ein Trommelfilter, ein Bandfilter oder ein Scheibenfilter ist. Unter dynamischen Filtrationseinrichtungen werden im Rahmen dieser Offenbarung Filtrationseinrichtungen verstanden, die über einen externen Antrieb im Fall von Trommel- oder Scheibenfiltern in Rotationsbewegung oder im Fall von Bandfiltern als Endlosband in lineare Bewegung versetzt werden, um einen Austrag der auf der getauchten Filteroberfläche abgesetzten Feststofffraktion aus dem Behälter und damit aus der Flüssigkeit heraus zu erreichen.

Eine optimale hydraulische Durchsatzleistung wird erreicht, wenn die Porengröße der zumindest einen Filtrationseinrichtung vorzugsweise zwischen 1 µm und 1000 µm beträgt. Bei geringerer Porengröße handelt es sich bereits um Filter für den Bereich der Ultramikrofiltration beziehungsweise der Nanofiltration, die jedoch für den praktischen Einsatz in der Abwasseraufbereitung aufgrund ihres hohen Verblockungspotentials ungeeignet sind. Insbesondere können Ultra- und Nanofilter nur mit aufwändigen Zusatzeinrichtungen, wie Vakuum- oder Druckbeaufschlagungen, jedoch nicht als Gravitationsfilter wie die erfindungsgemäß eingesetzten Mikrofilter betrieben werden.

In weiteren Ausführung der Erfindung ist in dem Anströmraum zumindest eine weitere Fluideinlassvorrichtung zur Durchführung einer Flotation, vorzugsweise einer Nanoflotation, besonders bevorzugt eine Entspannungsflotation vorgesehen.

Im Folgenden wird anhand eines nicht-einschränkenden Ausführungsbeispiels mit zugehörigen Figuren die Erfindung näher erläutert. Hierin zeigen:
- Fig. 1: eine schematische Schnittansicht der erfindungsgemäßen Vorrichtung; und
- Fig. 2: eine schematische Schnittansicht der Filtrationseinrichtung aus Fig. 1.

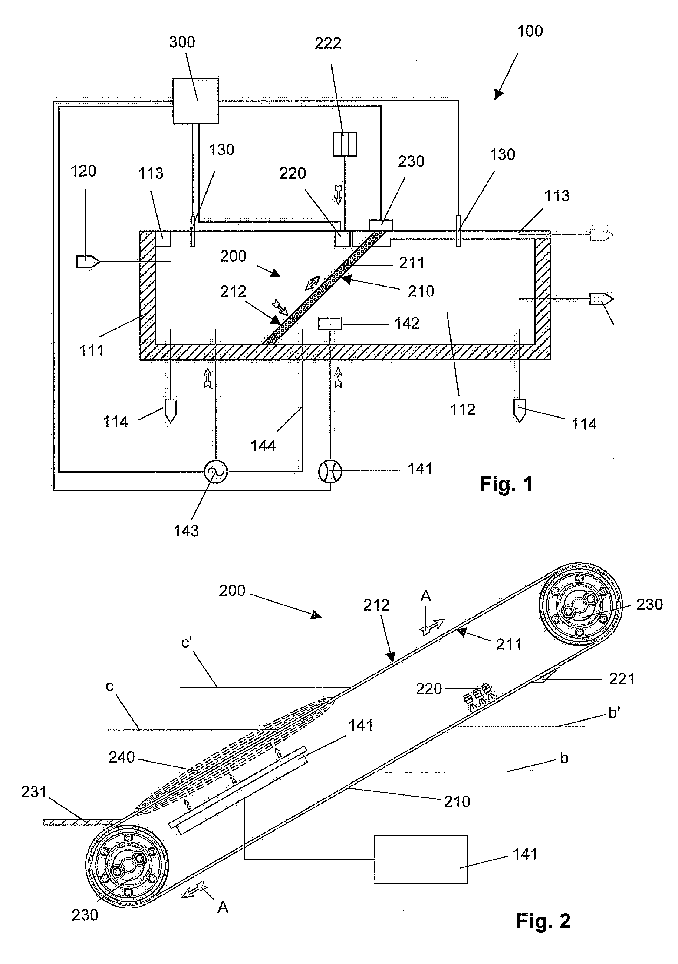

In der Fig. 1 ist in einer Schnittansicht die erfindungsgemäße Vorrichtung 100 mit einem in diesem Ausführungsbeispiel geschlossenen Behälter 110 dargestellt. Über einen Zulauf 120 gelangt das Abwasser in einen Anströmraum 111 des Behälters 110, der durch eine Filtrationseinrichtung 200 von einem Filtratraum 112 getrennt ist. Die Filtrationseinrichtung 200 ist in dieser Darstellung lediglich schematisch dargestellt, weitere Details zu der Filtrationseinrichtung 200 können der Fig. 2 entnommen werden.

In dem Anströmraum 111 sowie im Filtratraum 112 sind Niveausonden 130 angeordnet, die jeweils die Füllstandhöhe im jeweiligen Behälterbereich 111, 112 kontinuierlich bestimmen. Diese Niveausonden 130 werden mittels einer Steuerungseinheit 300 überwacht.

Die Steuerungseinheit 300 überwacht und regelt zudem eine Luftversorgung 141, über die mit einer Fluideinlassvorrichtung 142, beispielsweise Belüftungsmembranen, im Filtratraum 112 Luft an die Unterseite 211 der Filterfläche 210 in Form eines feinblasigen Luftvorhangs herangeführt wird. In Abhängigkeit der getauchten Filterfläche 210 und deren Beschaffenheit wird über die zugeführten Blasengröße der Luftvorhang angepasst und gesteuert, während die Anströmgeschwindigkeit der an die Filterfläche 210 herangeführten Luft derart gewählt ist, dass die Luft die Filterfläche 210 der Filtrationseinrichtung 200 in Vibration versetzt und in der Folge die Feinstteilchen im Anströmraum 111 in Schwebe hält.

In dieser Ausführung der erfindungsgemäßen Vorrichtung 100 ist im Anströmraum 111 zusätzlich eine Nanoflotation vorgesehen, um die Feinstteilchen an der Ablagerung an der Oberseite 212 der getauchten Filterfläche 210 zu hindern. Hierfür ist ein Nanoblasengenerator 143 vorgesehen, der der Produktion von Luftbläschen mit Durchmessern im Nanobereich, insbesondere mit Durchmessern kleiner 1 µm, üblicherweise 100 - 200 nm, dient. Zur Bildung dieser Nanobläschen benötigt der Nanoblasengenerator 143 Flüssigkeit, wobei bei dieser Ausführung der Erfindung über eine Leitung 144 dem Nanoblasengenerator 143 Filtratflüssigkeit aus dem Filtratraum 112 zugeführt wird. Die derart generierten Nanobläschen sorgen dafür, dass die Feinstteilchen an der Oberfläche der Flüssigkeit im Anströmraum 111 treiben und somit nicht die Oberfläche 212 der Filterfläche 210 verblocken.

Zur Reinigung der Filtrationseinrichtung 200 ist eine Filterreinigungseinrichtung 220 vorgesehen, die mittels Druckluft und/oder Wasser eine Reinigung der Oberfläche 212 der Filterfläche 210 vornimmt, nachdem der Filterkuchen, nämlich die aus dem Abwasser abgeschiedenen Feststoffpartikel, von der Oberfläche 212 der Filterfläche 210 mittels einer Schabeinrichtung 221 (Fig. 2) entfernt wurde. Die Versorgung der Filterreinigungseinrichtung 220 mit Druckluft und Wasser erfolgt über eine Versorgungseinrichtung 222, wobei die Filterreinigungseinrichtung 220 ebenfalls über die Steuerungseinheit 300 überwacht und geregelt wird. Für die Bewegung der belegten Filterfläche 210 aus den Behälter 110 heraus ist eine Transporteinrichtung 230, beispielsweise Antriebsrollen wie in Fig. 2 dargestellt, vorgesehen.

Der Behälter 110 verfügt des Weiteren über Überlaufeinrichtungen 113, die jeweils ein Überlaufen des Anströmraums 111 bzw. des Filtratraums 112 verhindern. Das Filtrat aus dem Filtratraum 112 wird über einen Ablauf 121 aus den Behälter 110 abgeleitet. Zusätzlich sind Sumpfentnahmen 114 vorgesehen, die der Entnahme von Partikelschlamm, der sich am Boden des Behälters 110 ablagern, dienen.

In der Fig. 2 ist die Filtrationseinrichtung 200 wiederum schematisch in einer Schnittansicht dargestellt, wobei aus Gründen der Übersichtlichkeit auf die Darstellung des Behälters 110, in der die Filtrationseinrichtung 200 angeordnet ist, verzichtet wurde.

Bei dieser Ausführung der Erfindung handelt es sich bei der Filtrationseinrichtung 200 um eine Bandfilteranlage, deren Filterfläche 210 als Endlosband realisiert ist, das über eine Transporteinrichtung 230, im dargestellten Fall Antriebsrollen, entlang des Pfeils A linear bewegt wird. Diese Antriebsrollen befinden sich außerhalb des Behälters 110, wobei eine Abdichtung 231, beispielsweise in Form einer Dichtlippe, im Bereich des Bodens des Behälters 110 ein Austreten von Flüssigkeit über die Oberfläche 212 der Filterfläche 210 verhindert, sodass das Abwasser lediglich durch die Filterfläche 210 hindurch in den Filtratraum 112 strömen kann.

An der Unterseite 211 der Filterfläche 210 ist die Fluideinlassvorrichtung 142, in dieser Ausführung der Erfindung Belüftungsmembranen, angeordnet, die über die aus ihnen austretenden Luftblasen die Filterfläche 210 in Schwingung versetzt (schematisch durch den strichlierten Bereich 240 dargestellt).

Im rücklaufenden Bereich des Filterbandes ist eine Schabeeinrichtung 221 zur Entfernung von Feststoffresten auf der Oberfläche 212 der Filterfläche 210 angeordnet. Des Weiteren ist eine Filterreinigungseinrichtung 220 vorgesehen, die letzte Reste an Feststoffpartikel mittels Druckluft und/oder Wasser entfernt, bevor die Filterfläche 210 wieder in die im Filtratraum 112 befindliche Flüssigkeit eintaucht, und durch die Linearbewegung weiter transportiert wird, bis sich dieser freie Abschnitt der Filterfläche 210 wieder oberhalb der Fluideinlassvorrichtung 142 befindet.

Nachfolgend wird das erfindungsgemäße Verfahren anhand der Figuren näher erläutert.

Im Betrieb wird über die Luftversorgung 141 Luft in Form eines mittel- bis feinblasigen Luftblasenvorhangs in den Filtratraum 112 eingebracht. Die Luftblasen steigen hierbei an der Unterseite 211 der Filterfläche 210 an die Oberfläche des Filtrats und verursachen entlang der Unterseite 211 eine turbulente Strömung. Zudem steigt aufgrund des einströmenden Luftvolumens der Flüssigkeitspegel im Filtratraum 112 von einem ersten Niveau b auf ein zweites Niveau b'. Gleichzeitig versetzt diese turbulente Luft/Wasserströmung die getauchte Filterfläche 210 in Schwingung 240.

Diese Vibration 240 der getauchten und gegebenenfalls auch nicht getauchten Filterfläche 210 bewirkt, dass auf der Oberfläche 212 der getauchten Filterfläche 210 abgelagerte Partikel weggeschleudert werden und insbesondere Feinstteilchen aufgrund der Schwingungen im Abwasser im Anströmraum 111 in Schwebe gehalten werden, während die wässrige Fraktion des Abwassers durch die Filterfläche 210 in den Filtratraum 112 strömt. Gleichzeitig werden über den Nanoblasengenerator 143 Nanobläschen in den Anströmraum 111 eingebracht, die während ihres Aufsteigens Feinstteilchen der Feststofffraktion des Abwassers an sich binden und an die Flüssigkeitsoberfläche im Anströmraum 111 bringen.

Sobald eine weitgehende Belegung der Oberfläche 212 der getauchten Filterfläche 210 mit abgelagerten Partikeln größeren spezifischen Gewichts bzw. Durchmessers erfolgt, steigt aufgrund der geringer werdenden Filtrationsgeschwindigkeit der Flüssigkeitspegel des unfiltrierten Abwassers im Anströmraum 111 ebenfalls von einem ersten Niveau c auf ein zweites Niveau c'.

Die Flüssigkeitspegel in Anströmraum 111 und Filtratraum 112 werden mittels der Niveausonden 130 kontinuierlich überwacht. Sobald in dem Anströmraum 111 der Flüssigkeitspegel ein vorbestimmtes Niveau c' erreicht, wird die Luftzufuhr über die Fluideinlassvorrichtung 142 unterbrochen und gleichzeitig auch die Nanoflotation im Anströmraum 111 angehalten. Dabei fällt der Flüssigkeitspegel im Filtratraum 112 auf das erste Niveau b herab. Durch die entstehende Sogwirkung wird die Filtrationsgeschwindigkeit erhöht, während gleichzeitig im Anströmraum 111 nun auch die Feinstpartikeln im Abwasser an die Oberfläche 212 der Filterfläche 210 transportiert werden. Hierbei fällt der Flüssigkeitspegel im Anströmraum 111 ebenfalls schlagartig, während der Filterkuchen auf der Filteroberfläche 212 anwächst. Sobald die Filterfläche 210 völlig verblockt ist, erfolgt kein weiteres Abfallen des Flüssigkeitspegels innerhalb des Anströmraums 111 (bei diskontinuierlicher Zufuhr an Abwasser) bzw. steigt der Flüssigkeitspegel wieder an (bei kontinuierlicher Zufuhr an Abwasser).

Zu diesem Zeitpunkt wird die Transporteinrichtung 230 der Filtrationseinrichtung 200 aktiviert, und die getauchte und verblockte Filterfläche 210 wird mit den darauf befindlichen Ablagerungen in Richtung des Pfeils A aus den Behälter 110 herausbewegt. Damit steht innerhalb des Behälters 110 wiederum eine freie getauchte Filterfläche 210 für die Mikrofiltration zu Verfügung. Die Bandbewegung wird unterbrochen, wenn das Ausschaltniveau im Anströmraum 111 wieder erreicht wird, während wiederum Luft über die Fluideinlassvorrichtung 142 in den Filtratraum 112 beziehungsweise Nanobläschen über den Nanoblasengenerator 143 in den Anströmraum 111 eingebracht werden, sobald Abwasser wieder zugeführt wird.

Bei Bewegung des Filterbandes wird gleichzeitig auch eine Reinigung der Filterfläche 210 mittels der Filterreinigungseinrichtung 220 ausgelöst, wobei nach der mechanischen Entfernung des Filterkuchens von der Filteroberfläche 212 mit Hilfe der Schabeinrichtung 221 die Oberfläche 212 zusätzlich mit Druckluft und/ oder Wasser von verbliebenen Ablagerungen befreit wird.

Es versteht sich, dass die vorliegende Erfindung nicht auf das oben beschriebene Ausführungsbeispiel beschränkt ist. Insbesondere können unterschiedliche Behälter, sowie Beckenformen wie Kollektor/Gruppen-Design, Filtereinrichtungen sowie Fluideinlassvorrichtungen zum Einsatz kommen. Erfindungswesentlich ist, dass in dem Filtratraum eine gerichtete Fluidströmung generiert wird, die ein vorzeitiges Verblocken der getauchten Filterfläche verhindert, wobei in Hinblick auf die Zufuhr des Abwassers wahlweise ein Batch- oder Durchlaufbetrieb oder eine Kombination beider Betriebsweisen vorgesehen ist.

## Patentansprüche

1. Verfahren zur mechanischen Feststoffabscheidung aus Abwasser aus Industrie und/oder Kommunen mit einer wässrigen Fraktion und einer Feststofffraktion, wobei kontinuierlich oder diskontinuierlich das zu reinigenden Abwasser einem Behälter (110) zugeführt wird, das zu reinigende Abwasser über zumindest einen Zulauf (120) in einen Anströmraum (111) eingeleitet wird, das Abwasser über zumindest eine Filtrationseinrichtung (200) mit einer bewegbaren Filterfläche (210) filtriert wird, wobei die in dem Abwasser enthaltene Feststofffraktion an der Filterflächenoberseite (212) der Filterfläche (210) der zumindest einen Filtrationseinrichtung (200) abgelagert wird, während die das Filtrat bildende Wasserfraktion aufgrund der Schwerkraft in einen Filtratraum (112) strömt, **dadurch gekennzeichnet, dass** im Filtratraum (112) eine gerichtete Fluidströmung an die Filterflächenunterseite (211) der Filterfläche (210) der zumindest einen Filtrationseinrichtung (200) erfolgt.

2. Verfahren nach Anspruch 1, **dadurch gekennzeichnet, dass** zur Bildung der gerichteten Fluidströmung Luft über zumindest eine Fluideinlassvorrichtung (142) an die Filterflächenunterseite (211) der zumindest einen Filtrationseinrichtung (200) angeströmt wird.

3. Verfahren nach Anspruch 1 oder 2, **dadurch gekennzeichnet, dass** die zumindest eine Filterfläche (210) zusätzlich in Vibration versetzt wird.

4. Verfahren nach Anspruch 3, **dadurch gekennzeichnet, dass** die zumindest eine Filtrationseinrichtung (200) über die Luftanströmung in Vibration versetzt wird.

5. Verfahren nach einem der Ansprüche 1 bis 4, **dadurch gekennzeichnet, dass** bei Erreichen eines vorbestimmten ersten Flüssigkeitspegels (c') im Anströmraum (111) die Anströmung der Filterfläche (210) im Filtratraum (112) über die zumindest eine Fluideinlassvorrichtung (142) unterbrochen wird.

6. Verfahren nach einem der Ansprüche 1 bis 5, **dadurch gekennzeichnet, dass** bei Erreichen des vorbestimmten ersten Flüssigkeitspegels (c') im Anströmraum (111) die mit der Feststofffraktion belegte Filterfläche (210) aus den Anströmraum (111) heraus bewegt wird, während eine von Partikel befreite Filterfläche (210) in den Anströmraum (111) bewegt wird.

7. Verfahren nach einem der Ansprüche 1 bis 6, **dadurch gekennzeichnet, dass** zusätzlich in dem Anströmraum (111) eine Nanoflotation, vorzugsweise eine Entspannungsflotation durchgeführt wird.

8. Verfahren nach einem der Ansprüche 1 bis 7, **dadurch gekennzeichnet, dass** die Steuerung des Verfahrens vollautomatisch erfolgt.

9. Vorrichtung zur mechanischen Feststoffabscheidung aus Abwasser mit einem Behälter (110), der kontinuierlich oder diskontinuierlich mit dem zu reinigenden Abwasser beschickt wird, wobei zumindest eine in dem Behälter (110) angeordnete Filtrationseinrichtung (200) den Behälter (110) in einen Anströmraum (111) und in zumindest einen Filtratraum (112) trennt, und die zumindest eine Filtrationseinrichtung (200) zumindest eine Filterfläche (210) mit einer dem Anströmraum (111) zugewandte Oberseite (212) und eine dem Filtratraum (112) zugewandte Unterseite (211) aufweist, **dadurch gekennzeichnet, dass** zumindest eine Fluideinlassvorrichtung (142) in dem Filtratraum (112) angeordnet ist.

10. Vorrichtung nach Anspruch 9, **dadurch gekennzeichnet, dass** die zumindest eine Fluideinlassvorrichtung (142) in dem Filtratraum (112) verstellbar angeordnet ist.

11. Vorrichtung nach Anspruch 9 oder 10, **dadurch gekennzeichnet, dass** die zumindest eine Fluideinlassvorrichtung (142) als Belüftungsmembran ausgebildet ist.

12. Vorrichtung nach einem der Ansprüche 9 bis 11, **dadurch gekennzeichnet, dass** die zumindest eine Filtrationseinrichtung (200) in dem Behälter (110) geneigt zu der Vertikalachse des Behälters (110) angeordnet ist.

13. Vorrichtung nach einem der Ansprüche 9 bis 12, **dadurch gekennzeichnet, dass** die zumindest eine Filtrationseinrichtung (200) ein dynamischer Filter, insbesondere ein Trommelfilter, ein Bandfilter oder ein Scheibenfilter ist, wobei die Porengröße der zumindest einen Filtrationseinrichtung (200) vorzugsweise zwischen 1 µm und 1000 µm beträgt.

14. Vorrichtung nach einem der Ansprüche 9 bis 13, **dadurch gekennzeichnet, dass** in dem Anströmraum (111) zumindest eine weitere Fluideinlassvorrichtung (143) zur Durchführung einer Flotation, vorzugsweise einer Nanoflotation, besonders bevorzugt eine Entspannungsflotation vorgesehen ist.
